**Europäisches Patentamt**

**European Patent Office**

**Office européen des brevets**

(11) Numéro de publication: **0 430 319 A1**

# DEMANDE DE BREVET EUROPEEN

(21) Numéro de dépôt: **90202941.2**

(22) Date de dépôt: **07.11.90**

(51) Int. Cl.5: **C08G 61/12**

(30) Priorité: **17.11.89 BE 8901229**

(43) Date de publication de la demande:
**05.06.91 Bulletin 91/23**

(84) Etats contractants désignés:
**AT BE CH DE DK ES FR GB GR IT LI LU NL SE Bulletin**

(71) Demandeur: **SOLVAY & Cie (Société Anonyme)**
**Rue du Prince Albert, 33**
**B-1050 Bruxelles(BE)**

(72) Inventeur: **Destryker, Elise**
**Jasmijnlaan, 11**
**B-1600 Sint-Pieters-Leeuw(BE)**
Inventeur: **Hannecart, Etienne**
**Arboretumlaan, 38**
**B-3080 Tervuren(BE)**

(74) Mandataire: **Nichels, William et al**
**Solvay & Cie Département de la Propriété Industrielle Rue de Ransbeek, 310**
**B-1120 Bruxelles(BE)**

(54) **Procédé pour la préparation de polythiophènes et dispositifs électroconducteurs les contenant.**

(57) L'invention concerne un procédé pour la préparation de polymères conducteurs d'éléctricité à base de polythiophènes par polymérisation chimique du thiophène au moyen d'un sel ferrique, d'un halogénure d'alkyle et de l'eau.

L'invention concerne également les dispositifs électroconducteurs contenant les polythiophènes obtenus et un polymère thermoplastique.

EP 0 430 319 A1

## PROCÉDÉ POUR LA PRÉPARATION DE POLYTHIOPHÈNES ET DISPOSITIFS ÉLECTROCONDUCTEURS LES CONTENANT

La présente invention concerne un procédé pour la préparation de polymères conducteurs d'électricité à base de polythiophènes par polymérisation chimique du thiophène en présence d'eau et d'halogénure d'alkyle.

On a proposé dans la demande de brevet français n° 88.07976 un procédé de préparation de polymères conducteurs d'électricité à base de polythiophènes par polymérisation chimique du thiophène dans un milieu réactionnel comprenant un sel ferrique, un halogénure d'alkyle et de l'eau.

On a maintenant trouvé un procédé pour la préparation de polythiophènes par polymérisation chimique du thiophène permettant d'obtenir des polymères conducteurs ayant des propriétés de conductivité électrique encore plus élevée. Ces propriétés sont obtenues tout en conservant les autres caractéristiques mentionnées dans la demande de brevet precité, c'est-à-dire un taux de conversion élevé des polymères conducteurs, des polymères homogènes et une stabilité thermique satisfaisante.

Les polythiophènes ainsi obtenus sont mis en oeuvre aisément. En outre, après mise en oeuvre de mélanges de polythiophène et de résines telles que le chlorure de polyvinyle ou le polyéthylène, les composites obtenus présentent une bonne dispersion et une résistance mécanique satisfaisante.

A cet effet, la présente invention concerne un procédé pour la préparation de polymères conducteurs d'électricité à base de polythiophènes par polymérisation chimique du thiophène dans un milieu réactionnel comprenant un sel ferrique, un halogénure d'alkyle et de l'eau, la quantité d'eau mise en oeuvre étant supérieure à 5 % en poids d'halogénure d'alkyle.

Par polythiophène, on entend tout polymère contenant des unités récurrentes de thiophène non substitué et quel que soit son poids moléculaire.

Dans le milieu réactionnel, on met généralement en oeuvre un halogénure d'alkyle comprenant de 1 à 10 atomes de carbone. Habituellement, on met en oeuvre un halogénure d'alkyle linéaire ou ramifié contenant de 1 à 8 atomes de carbone, l'halogénure étant un chlorure ou un fluorure. De préférence, on met en oeuvre un chlorure d'alkyle linéaire contenant de 1 à 4 atomes de carbone. De manière particulièrement préférée, on met en oeuvre le chloroforme ou le chlorure de méthylène.

La quantité d'halogénure d'alkyle mis en oeuvre dans le procédé selon l'invention est généralement comprise entre 0,001 et 1 litre par g de thiophène, habituellement entre 0,004 et 0,8 litre par g de thiophène et de préférence entre 0,008 et 0,5 litre par g de thiophène.

Dans le milieu réactionnel, on met en oeuvre un sel ferrique comme agent dopant et provoquant la polymérisation. Généralement, on utilise un sel ferrique organique ou inorganique. Habituellement, on met en oeuvre un sel ferrique inorganique tel qu'un chlorure, un sulfate ou un nitrate. De manière préférée, on met en oeuvre le chlorure ferrique. Le sel ferrique peut être introduit sous forme anhydre ou hydratée, l'eau apportée par le sel ferrique hydraté fait partie du milieu réactionnel et est prise en compte pour calculer les rapports avec les autres additifs.

Le rapport molaire entre le sel ferrique et le thiophène mis en oeuvre dans le procédé selon l'invention est généralement compris entre 2,5 et 20. Habituellement, ce rapport est compris entre 5 et 15 et de préférence entre 8 et 12.

Le rapport molaire entre l'eau et le sel ferrique est une caractéristique importante pour l'invention. Ce rapport est généralement compris entre 0,01 et 6, habituellement entre 0,1 et et de préférence entre 0,3 et 4.

La quantité d'eau dans le procédé selon l'invention est généralement comprise entre 5 et 500 % en poids d'halogénure d'alkyle, habituellement entre 5 et 250 % et de préférence entre 5 et 100 % en poids d'halogénure d'alkyle.

La réaction de polymérisation chimique est habituellement conduite sous atmosphère d'air ou d'azote et, de préférence, sous atmosphère d'azote.

La température à laquelle est réalisé le procédé de polymérisation est généralement comprise entre 0 et 25° C, habituellement entre 2 et 20° C et de préférence entre 5 et 15° C lorsqu'on opère à pression atmosphérique.

La pression à laquelle est réalisé le procédé est généralement comprise entre 0,1 et 10 bars et de préférence elle est égale à la pression atmosphérique.

Le procédé selon l'invention peut avantageusement être réalisé en suivant les étapes suivantes :
- lors d'une première étape, on introduit dans le réacteur sous atmosphère d'azote une fraction de la quantité nécessaire d'halogénure d'alkyle et le sel ferrique;
- lors d'une deuxième étape, on ajoute sous agitation la quantité d'eau appropriée et le thiophène dissous dans la quantité nécessaire d'halogénure d'alkyle, avec obtention d'un polymère;
- lors d'une troisième étape, le polymère obtenu est lavé, puis séché.

Lors de la deuxième étape, il est particulièrement avantageux d'introduire l'eau et le thiophène dissous dans l'halogénure d'alkyle de façon continue, régulière et en parallèle.

Lors de la troisième étape, le polymère obtenu est de préférence lavé avec de l'acétonitrile.

Le procédé selon l'invention peut être réalisé dans tout appareillage ou tout réacteur permettant de réunir les conditions opératoires décrites ci-avant.

Les polythiophènes obtenus selon le procédé de l'invention peuvent être aisément dispersés dans des résines polymériques diverses et mis en oeuvre facilement. En effet, les polythiophènes et leurs mélanges avec des polymères thermoplastiques tels que le chlorure de polyvinyle ou le polyéthylène notamment, peuvent être estampés à chaud pour obtenir des plaques ou objets composites. Ces plaques ou objets composites présentent une bonne résistance mécanique et possèdent, contrairement aux objets composites réalisés avec des polythiophènes obtenus par voie électrochimique, une conductivité électrique résiduaire élevée et stable dans le temps. Ces plaques ou objets composites sont homogènes car les polythiophènes y sont bien dispersés.

Les plaques ou objets composites peuvent être chargées notamment par des fibres de verre, du noir de carbone, du carbonate de calcium ou des particules métalliques.

L'invention concerne donc également des compositions comprenant les polythiophènes et un ou plusieurs polymères thermoplastiques, ainsi que les dispositifs électroconducteurs comprenant ces compositions.

Enfin, les polythiophènes et les compositions comprenant des polythiophènes obtenus selon le procédé de l'invention peuvent être utilisés pour leurs propriétés de conductivité électrique, l'absorption électromagnétique et de conductivité thermique et, plus particulièrement, pour la réalisation de dispositifs électroconducteurs.

L'invention est illustrée par les exemples suivants.

Exemple 1

Comme réacteur, on utilise un ballon de 3 l à 5 cols; chaque col étant muni respectivement d'un robinet à 3 voies, d'un thermomètre, d'un septum permettant de planter des aiguilles reliées à des pompes doseuses.

Ce ballon équipé d'un agitateur est placé dans un bain thermostatique et est purgé par un cycle de 3 vides et 2 rinçages à l'azote pur et sec.

Dans ce ballon maintenu à 10°C sous azote, on introduit ensuite 750 ml de chloroforme préalablement dégazé à l'azote, puis sous agitation on ajoute 546 g de chlorure ferrique anhydre.

Ensuite, on remplit sous azote un récipient de 500 ml avec 250 ml de chloroforme et 28,4 g de thiophène distillé et dégazé.

On introduit en parallèle à l'aide de pompes doseuses dans le ballon 100 ml d'eau en 5 minutes et le chloroforme et le thiophène, contenus dans le récipient, en 10 minutes.

Le ballon est ensuite encore maintenu sous agitation à 10°C pendant une heure, après quoi on introduit 750 ml d'acétonitrile très lentement durant 80 minutes dans ce ballon maintenu à 10°C.

Le produit est ensuite filtré à 20°C sous azote.

Le produit obtenu est lavé 6 fois avec 500 ml d'acétonitrile à 20°C, puis séché sous vide dynamique à 20°C.

On obtient finalement 41 g de polythiophène dopé qui présente une conductivité de 50 S.cm$^{-1}$ et avec un taux de conversion :

$$\left[ \frac{\text{polymère (polythiophène calculé comme non dopé)}}{\text{monomère (thiophène)}} \right] \text{ de 90 \%.}$$

Exemple 2R (de comparaison)

Comme réacteur, on utilise un ballon de 3 l à 5 cols; chaque col étant muni respectivement d'un robinet à 3 voies, d'un thermomètre, d'un septum permettant de planter des aiguilles reliées à des pompes doseuses.

Ce ballon équipé d'un agitateur est placé dans un bain thermostatique et est purgé par un cycle de 3 vides et 2 rinçages à l'azote pur et sec.

Dans ce ballon maintenu à 10°C sous azote, on introduit ensuite 750 ml de chloroforme préalablement dégazé à l'azote, puis sous agitation on ajoute 185 g de chlorure ferrique anhydre.

Ensuite, on remplit sous azote un récipient de 500 ml avec 250 ml de chloroforme et 9,25 g de thiophène distillé et dégazé.

On introduit, en 10 minutes, dans le ballon le chloroforme et le thiophène contenus dans le récipient à l'aide d'une pompe doseuse.

Le ballon est ensuite encore maintenu sous agitation à 10°C pendant une heure, après quoi on introduit 250 ml d'acétonitrile très lentement durant 40 minutes dans ce ballon maintenu à 10°C.

Le produit est ensuite filtré à 20°C sous azote.

Le produit obtenu est lavé 6 fois avec 250 ml d'acétonitrile à 20°C, puis séché sous vide dynamique à 20°C.

On obtient finalement 15,7 g de polythiophène dopé qui présente une conductivité de 0,02 S.cm$^{-1}$ et avec un taux de conversion :

$$\left[ \frac{\text{polymère (polythiophène calculé comme non dopé)}}{\text{monomère (thiophène)}} \right] \text{de 95 \%.}$$

**Revendications**

1 - Procédé pour la préparation de polymères conducteurs d'électricité à base de polythiophènes par polymérisation chimique du thiophène dans un milieu réactionnel comprenant un sel ferrique, un halogénure d'alkyle et de l'eau, caractérisé en ce que la quantité d'eau mise en oeuvre est supérieure à 5 % en poids d'halogénure d'alkyle.

2 - Procédé selon la revendication 1, caractérisé en ce que le rapport molaire entre l'eau et le sel ferrique est compris entre 0,01 et 6.

3 - Procédé selon la revendication 2, caractérisé en ce que la quantité d'halogénure d'alkyle mis en oeuvre est comprise entre 0,001 et 1 litre par g de thiophène.

4 - Procédé selon la revendication 2 ou 3, caractérisé en ce que le rapport molaire entre le sel ferrique et le thiophène est compris entre 2,5 et 20.

5 - Procédé selon l'une quelconque des revendications précédentes, caractérisé en ce que l'halogénure d'alkyle mis en oeuvre est le chloroforme ou le chlorure de méthylène.

6 - Procédé selon l'une quelconque des revendications précédentes, caractérisé en ce que la température est comprise entre 0 et 25°C.

7 - Procédé selon l'une quelconque des revendications précédentes, caractérisé en ce qu'il comprend les étapes suivantes :
- lors d'une première étape, on introduit dans le réacteur sous atmosphère d'azote une fraction de la quantité nécessaire d'halogénure d'alkyle et le sel ferrique;
- lors d'une deuxième étape, on ajoute sous agitation l'eau et le thiophène dissous dans la quantité nécessaire d'halogénure d'alkyle, un polymère est obtenu;
- lors d'une troisième étape, le polymère obtenu est lavé, puis séché.

8 - Procédé selon la revendication 7, caractérisé en ce que le polymère obtenu est mélangé avec un polymère thermoplastique, tel que le chlorure de polyvinyle ou le polyéthylène, et que le mélange ainsi obtenu est estampé à chaud.

9 - Dispositifs électroconducteurs comprenant un polymère obtenu selon l'une quelconque des revendications 1 à 8.

10 - Dispositifs électroconducteurs selon la revendication 9, caractérisés en ce qu'ils comprennent un ou plusieurs polymères thermoplastiques tel que le chlorure de polyvinyle ou le polyéthylène.

**Office européen des brevets**

# RAPPORT DE RECHERCHE EUROPEENNE

Numéro de la demande

**EP 90 20 2941**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CHEMICAL ABSTRACTS, vol. 107, no. 22, 30 novembre 1987, page 19, résuumé no. 199191u, Columbus, Ohio, US; & JP-A-62 109 821 (TOATSU CHEMICALS, INC.) 21-05-1987 --- | | C 08 G 61/12 |
| A | CHEMICAL PATENTS INDEX, BASIC ABSTRACTS JOURNAL, section A: PLASDOC, semaine 8742, 16 décembre 1987, no. 87-296490, Derwent Publications Ltd, Londres, GB; & JP-A-62 209 130 (KOMATSU K.K.) 14-09-1987 --- | | |
| E,X | EP-A-0 350 083 (SOLVAY)<br>* Revendications * --- | 1-10 | |
| A | EP-A-0 253 594 (COOKSON GROUP) --- | | |
| A | PATENT ABSTRACTS OF JAPAN, vol. 11, no. 317 (C-452)[2764], 15 octobre 1987; & JP-A-62 106 923 (MITSUI TOATSU CHEM., INC.) 18-05-1987 ----- | | |

| DOMAINES TECHNIQUES RECHERCHES (Int. Cl.5) |
|---|
| C 08 G |

Le présent rapport de recherche a été établi pour toutes les revendications

| Lieu de la recherche | Date d'achèvement de la recherche | Examinateur |
|---|---|---|
| La Haye | 20 février 91 | STIENON P.M.E. |